# EUROPEAN PATENT APPLICATION

(11) **EP 2 811 354 A1**
(43) Date of publication of application: **10.12.2014**
(21) Application number: 13170252.4
(22) Date of filing: 03.06.2013
(51) Int. Cl.: G05B 19/418

(54) **Process automation system with a central computing unit**

(71) Applicant: Siemens Aktiengesellschaft, 80333 München (DE)
(72) Inventor: Lutz, Benjamin, 76327 Pfinztal (DE); Runde, Stefan, 75045 Walzbachtal (DE); Scholz, Andreas, 85716 Unterschleißheim (DE)

(57) **Abstract**

The invention is concerned with a method for operating a process automation system (10) that is designed for controlling an industrial process and/or traffic-control signals. The system (10) comprises field devices (12, 14, 16) arranged in a field (26) of the process and a central controller unit (18) for controlling the process through the field devices (12, 14, 16). The central controller unit (18) generates control data (CDATA) for the field devices (12, 14, 16) by running a control program (42'). This control program (42') is provided as a browser executable application (42) that is designed to receive and process field data (FDATA) from the field devices (12, 14, 16) and to generate and send out the control data (CDATA). The central controller unit (18) executes an internet browser program (38) and the internet browser program (38) runs the application (42).

## Description

The invention is concerned with a process automation system comprising field devices like sensors that are arranged in a field of the process, e.g. next to machines in a factory building. The field devices are connected to a central controller unit for controlling the process through the field devices.

The process automation system may be used to automatically control an industrial process, like the processing of chemicals or other substances or product and/or the production of products or goods. In the context of the invention, a process automation system may also be used for controlling traffic-control signals.

The process automation system may comprise sensors for obtaining measurement data describing the current state of components of the process, like the speed of a belt conveyor, the flow of a fluid through a valve, the activity of a pump or the torque generated by an electrical engine. The sensors may be coupled to a central controlling unit by a communication network structure that may comprise a field bus, like the Profinet-Bus, or an Ethernet-network. The measurement data and the data describing the current state of a field device are denoted here as field data. The central control unit may receive the field data from the field devices and process the field data in order to provide a monitoring functionality for observing the process in a control room. Also, by means of the central control unit, control data may also be generated for configuring the field devices, like setting a new parameter value in a control algorithm of one of the field devices. This type of control data, i.e. the configuration data, may be set by an engineer who monitors the process automation system in a control room.

If the data bandwidth of the network structure is large enough or if the process involves comparatively slow changes, like the filling of a large basin with water using a small pump, the central control unit may also provide control loops which process the field data in order to generate control data for controlling the behaviour of the field devices, like stopping the pump, when the amount of water in the basin has reached a given level.

The described functionalities are generally provided by a control program which is run by the central controller unit. To provide a central controller unit with its functionalities, the control program must be written in a program code that is suitable for being run by the central controller unit. If a new system is to be developed which shall, e.g., use a new generation of computing devices, this may imply that the program code of the control program must be re-written or otherwise it may not be possible to run the old control program on the new computer devices. This interdependence of the control program and the computing devices of the central controller unit makes the development of a process automation system costly.

It is an object of the present invention to provide a process automation system that allows to exchange hardware components of the of the central controller unit without having to adapt the control program.

A solution to this problem is provided by the method according to claim 1, the process automation system according to claim 10, the storage medium according to claim 14 and the web server device according to claim 15. Embodiments of the invention providing further advantages are given by the dependent claims.

The invention is based on the known structure of a process automation system comprising field devices arranged in a field of the process and a central controller unit for controlling the process through the field devices. According to the inventive method, one or several or all of the field devices transmit field data, e.g. measurement data, to the central controller unit and the central controller unit generates control data for one or several or all of the field devices by running a control program. The control data may be for re-configuring the respective field device and/or for direct controlling the process through the field device. The exchange of data may take place through a communication network structure.

According to the invention, as the control program a browser executable application is provided. This application is designed to receive and process the field data and to generate and send out the control data. Instead of executing a dedicated control program written in binary code for its hardware components, the central controller unit is now executing an Internet browser program which, in turn, is running the application.

Accordingly, the inventive process automation system comprises said field devices, the central controller unit and a communication network structure coupling the field devices with the central controller unit. According to the invention, the central controller unit now comprises at least one computing device with an Internet browser program, wherein the computing device is designed to execute at least one instance of the Internet browser program. In other words, each computing device may at the same time execute the browser program once or, e.g. based on a multitasking operation system, even more than only once.

The inventive process automation system also comprises a storage unit, for example a web server, that may be contacted by each Internet browser program. The storage unit is designed to provide an application to each executed Internet browser program for running the application. This application is again the already mentioned special application that makes the control program, i.e. when the application is run by an Internet browser program, the application receives field data from the field of the process over the network structure and processes the received field data and generates and sends out control data to the field over the network structure.

The invention provides the advantage that in the central control unit the control program does not have to be changed even if the underlying system for running the control program is exchanged, may it be that a new operating system is used or the computer chips, like graphic cards, are changed. The control program is provided as a browser executable application and may thus be run by any browser program that is suitable for interpreting the script language the application is written in. When developing a new process automation system, after designing the central controller unit, the developers may simply obtain an Internet browser program like it is readily available for most standard computing devices. This Internet browser program may than run the old application.

As a consequence, it is even possible to use a mixed hardware structure for providing the computing devices in a central computing unit. Especially, as the at least one computing device, the central control unit may comprise one or more of each of the following hardware units: a personal computer, a notebook, a tablet-computer, a smartphone. Computing devices of this type generally already comprise an Internet browser program.

A suitable form in which the application may be provided is given, if the program code is written in a script language such as, for example, HTML5 and/or JavaScript.

In the following, further advantageous embodiments of the invention are described. The features of these embodiments may be applied to both the inventive method and the inventive process automation system.

In one embodiment, the browser executable application comprises at least one control loop for controlling at least a part of the process. In other words, at least one control loop for controlling the process runs through the Internet browser program. Each control loop is designed to generate at least a part of the control data in dependence on at least a part of the received field data. The application may provide e.g. a setpoint control loop for adapting a physical quantity, like pressure or speed, to a given setpoint. A control loop may comprise a proportional, integral and/or derivative control. A control loop may also perform logic and/or sequential control. It may also comprise a neural network and/or fuzzy logic. Providing the at least one control loop in the application has the advantage that in the field itself less dedicated hardware, for example a programmable logic controller (PLC), is needed, which makes the system cheaper with regard to production.

In another embodiment, the browser executable application is designed to provide a user interface to a user of the browser program. The user interface may provide a monitoring functionality for the process automation system, i.e. a part or all of the received field data may be displayed or a quantity derived from the field data.

Alternatively or additionally, the interface may provide a configuration functionality for setting a parameter value of at least one parameter of the control unit itself and/or of one or more of the field devices. This provides the advantage that the central control unit may be used as an interface for the process automation system as it is needed in a control room. Thus, even a whole SCADA-system (supervisory control and data acquisition) may be transferred to new computing devices without having to adapt the corresponding program code of the SCADA-system.

Further, the application may also be designed to provide the functionality of an engineering tool for setting up the process automation system. Such an engineering tool may, for example, provide a part or all of the functionalities know from a known engineering tool like the product "TIA" (Totally Integrated Automation) provided by the company Siemens AG.

According to one embodiment, the central control unit executes more than one Internet browser program, that is at least one additional Internet browser, wherein each additional Internet browser is also running the same application. In other words, several applications of the same type are running in parallel, meaning at the same time. This results in the generation of equivalent control data. However, this does not imply that these control data are necessarily identical. If, for example, one of the computing devices is malfunctioning, e.g. due to heat, this may now be detected. Further, a computer device for the computing unit may be, for example, a laptop. The user of this laptop might decide to disconnect the laptop in order to take it with him. Including several computing devices as part of the central control unit thus provides the advantage that defective or otherwise unavailable computing units do not have an effect on the control data needed for controlling the process. As control data is now generated in a redundant manner, the embodiment preferably also comprises a verification unit, which receives the control data sent out by all the running application and selects the control data of one of them according to a pre-defined selection criterion.

According to one embodiment, this selection criterion comprises the condition that in the case that only two applications are running, the application running for the longest time is declared as a master and the control data of the master is selected. Alternatively or additionally, in the case that more than two applications are running, the control data of all the applications are compared and the control data are selected according to a majority vote. This allows to detect a malfunctioning computing device, which is then preferably disconnected from the central computing unit or otherwise tagged as suspicious.

As the application may also receive user input, one embodiment of the application deals with the event that one of the running applications receives a user input regarding a re-configuration of the application, which none of the other running applications is aware of. In this case, the application notifies the remaining running applications of this re-configuration. The remaining running applications may then re-configure themselves according to the user input. In other words, all the running applications are synchronized, even if the user only re-configures one of them.

In the context of the invention, the field data transmitted from the field devices to the central control unit may comprise measurement data of physical quantities, wherein the measurement data are correlated to the current state of the process. The field data may also describe a state of at least one of the field devices, i.e., for example, the field data may also comprise a current value of an algorithm-parameter or a mode identity value describing the mode that a field device is currently running in. For example, a field device may report that it has now entered a stand-by mode.

Accordingly, a field device may be a so-called input device designed for transforming a sensor signal into network data that may be transferred via the network structure. An example of such an input device is the product "IT200M" offered by the company Siemens AG. Another example of a field device is a sensor device. Especially, the data may be provided by a sensor device which is directly connected to the network structure, i.e. the sensor device comprises the means for transforming the measurement value into field data which are suitable for transmitting over the network structure. Another type of field device that may be comprised in the inventive system is an actuation device directly connected to the network structure. Such an actuation device can, for example, be a pump, a valve, an electrical machine. For directly connecting the actuation device to the network structure, it comprises means for receiving control data from the network and processing the received control data in order to interpret the control commands comprised in the control data. However, for actuation devices which are not suitable for being directly connected to the network structure, a field device may also be provided, which is a so-called output device. Such an output device is designed for transforming the control data into a control signal for such an actuation device.

Accordingly, at least part of the control data may comprise a control command for a field device and/or a setpoint value for a setpoint control performed by a field device.

In the above description of the inventive process automation system it is mentioned that the application is provided to the Internet browser programs for running the application. As Internet browser programs are generally designed to obtain their data from a web server, one embodiment of the invention comprises a special web server. The web server is designed to provide the application to requesting Internet browser programs. Additionally, the web server couples the field devices and the computing unit, i.e. the web server is designed to receive a part or all of the field data and to forward at least part of the received field data to all running applications in the computing unit. This provides the advantage that the running applications do not have to be supplied with information on how to address each field device. Likewise, the applications may send their control data to the web server, which then distributes the control data to the right field devices.

As has already been mentioned, providing a control loop in an application requires a certain minimum data bandwidth in order to provide these control data in time. In the case that parts of the field devices require faster control loops, the system may also comprise at least one real-time control device which is designed to generate additional control data. Such a real-time control device may be, for example, a programmable logic controller. The real-time control device may itself be a field device reporting, for example, status data to the central control unit and receiving control data concerning e.g. setpoint values.

As the central element of the invention is a browser executable application, the invention also comprises a tangible storage medium, on which a control program in the form of a browser executable application is stored. This application is designed such that, if run by an Internet browser program, it receives and processes field data from field devices of a process automation system and generates and sends out the control data to field devices of the system.

The inventive application may also comprise further features that have already been described in the context of the inventive method and the inventive system.

Another aspect of the invention is a web server device. The web server device is the one already described, that is, the web server device provides the application to the central control unit such that the central control unit may run the application by means of one or several Internet browser programs. In other words, the web server device may connect on one side to a field bus and on the other side to a standard computer network, for example an Ethernet network. The web server may then be used to transfer field data out of the field and into the computer network to provide the field data to the running applications. The inventive web server device also comprises the already described tangible storage medium which stores the application.

The inventive web server device provides the advantage that an already existing process automation system with field devices arranged in a field of the process and a central controller unit comprising one or several computing devices, like, for example, personal computers or workstation computers, may be transformed into an embodiment of the inventive automation system. By installing the web server device into the existing system, the computing devices of the central control unit only need to execute one or several Internet browser programs. The Internet browser programs will then request the application from the web server and run one application each. This will result in the processing of the field data and the generation of control data as described.

For connecting the inventive web server device to the already existing system, the inventive web server device comprises a first connecting unit for connecting the device to a first part of a communication network structure, wherein the first connecting unit is designed to receive field data from field devices over the first part of the communication network. The web server device also comprises a second connecting unit for connecting the device to a second part of a communication structure, wherein the second connecting unit is designed for forwarding at least part of the received field data to at least one Internet browser program over the second part of the communication network structure.

In order to enable an Internet browser program to obtain the application over the second part of the network, the web server device also comprises a web server program for sending out the application to at least one requesting Internet browser program. Such a web server program may be a standard web server.

The web server device may also comprise further features as they have already been described in the context of the inventive method and the inventive automation system.

In the following, the invention is described in more detail on the basis of an example. For illustrating the example, the figure shows a schematic presentation of an embodiment of the inventive process automation system.

The features of the process automation system that are described in the following are to be considered as independent from each other and as describing each a separate advantageous embodiment of the invention that provides a separate advantage and that may be combined with other features in a different way from that shown in the figure. Further, the example may also be supplemented by features as they have already been described.

The figure shows a process automation system 10 comprising three groups of components, that is, field devices 12, 14, 16, a central control unit 18 and a communication network structure or short network 20. Each field device 12, 14, 16 may be coupled to a process component 22, which is part of a plant 24, for example a power plant, a production plant, an oil refining plant of a system of traffic-control lights in a town. The field devices 12, 14, 16 may be distributed over an area which forms the field 26, in which the process of the plant 24 is performed. The field may comprise e.g. a single room, a building, several buildings or a town.

The network structure 20 connects the field devices 12, 14, 16, that is field 24, to the central computing unit 18. The network structure 20 may comprise a plant bus 28, which may be realized as an industrial Ethernet. For the central controller unit 18, the network 20 may comprise a terminal bus 30, which may also be realized in Industrial-Ethernet technology. In the example shown, the plant bus 28 and the terminal bus 30 may be interconnected by a server 32. The server 32 is a web server device according to the invention. It is connected to the plant bus 28 via a first connecting unit C1 and to the terminal bus 30 via a second connecting unit C2.

A field device 14 may be directly connected to the plant bus 28 or a field device 16 may also be directly connected to the terminal bus 30. One of the field devices 14 may be an input device such as, for example, the product SIMATIC S7-400 offered by the company Siemens AG. A field device 12 may be connected to the plant bus 28 indirectly via the input device. For the connection to the input device 14, the field device 12 may exchange data with the input device 14 over a field bus DP, PA, HART, wherein DP, PA may be, e.g., a Profibus derivative. The field bus HART may be based on HART technology (highway addressable remote transducer protocol). The field buses may be linked by a further field device 12 such as a PA-link (PA-LNK) or, for example, another input device 12 like the product ET200M offered by the company Siemens AG.

The central controller unit 18 may comprise one or more computing devices 34, each of which may be, for example, a workstation, a personal computer, a notebook, a tablet-computer, a smartphone. One or several of the computing devices 34 may also be designed as a terminal with a monitor 36. The central controller unit 18 may then be installed in a control room for the plant 24.

Each computing device 34 may execute one or more instances 38 of an Internet browser program. Each instance 38 may contact the server 32. The server 32 comprises a storage medium 40, e.g. a hard drive or a CD-ROM, on which an application 42 is stored. The application 42 is written in program code that is executable or interpretable or runnable by each of the Internet browser program instances 38. The server 32 may provide the application 42 to each of the instances 38.

The increasing performance of web browsers and the corresponding servers has rendered it possible to use the browser as performance platform for applications and to produce an alternative for the hitherto common applications for operating systems such as e.g. Windows or Linux.

The advantage of browser-based solutions is that on the user's side merely a browser 38 is required. The installation and maintenance of concrete applications 42 can occur centrally and for all applicants simultaneously on the server 32.

The application 42 is a novel control system software for an automation system based on such a solution. The control system software fulfils the classic control and monitoring tasks, however offers the following specific characteristica:
- lean solution for small and medium-sized facilities, which can do without the classic pyramid structure of a PLS;
- flexible, scalable solution for control systems;
- zero installation of the control system software;
- setup with standardized IT hardware possible (router, notebook or PC);
- proprietary solutions;

Classic control system hierarchies do not address this problem.

The software application 42 may be realized by modern web technologies. The reason for this is that modern browsers and web-oriented languages (HTML5, JavaScript, and other Scripting Languages, or Java) due to their performance and flexibility offer more advantages than do classic applications (programs installed on a PC). Software applications applied to web technologies can be used directly by a browser without local installation and also are largely independent of the hardware, on which the browser is running. Even 3D games with complex graphics and animations, which require a large amount of computing power, can be realized by means of web technologies and be played in standard browsers. The processing of several thousand inquiries per second made by a browser to a web server do not represent a problem. Large parts of a known control system - serving and observing, controlling and regulating - are realized by software programs classically installed on computers and controls and also run there. One possibility of raised availability in this context is the provision of several computers, on which the same software program is installed.

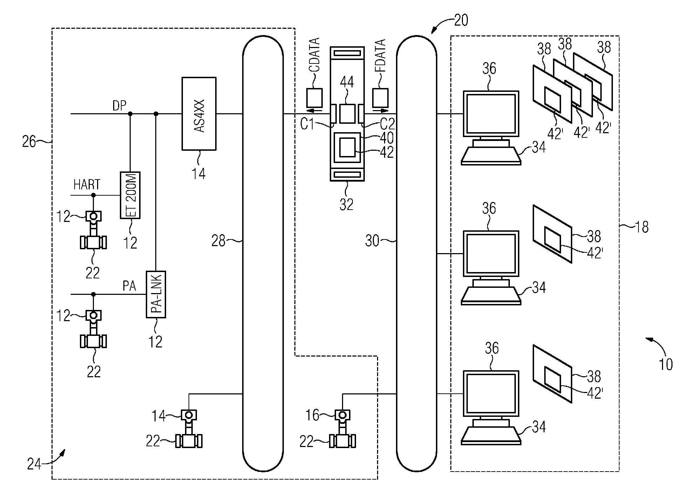

The system 10 shown in FIG 1 is based on the idea to use the advantages of modern web technologies, in order to render particularly small and medium-sized control systems more scalable, more flexible, and at the same time more cost-efficient, without having to make concessions with regard to availability. Moreover, thereby also modern devices, such as for entity tablet PCs can be employed in the field of control system technology.

Whilst the architecture of a control system shown in FIG 1 at first glance is similar to a classic automation pyramid, however, differs drastically in FIG 1 of control system technical tasks to the individual to the individual components.

At the core of the control system 10 shown is a server 32, which is responsible for the connection with the field 26. All I/O-data (I/O - Input/Output) or I/O-signals of the field devices and the controls, that is the field data FDATA coming from and the control data CDATA going to the field 26, are accessible by way of reading or writing. Moreover, on the server 32 runs a web server, via which web applications like the application 42 are provided. These web apps represent the actual core of the invention disclosure, since these (besides the classic control system functions in the sense of an operation and observation) also take over regulation and control of technical tasks. This means that in contrast to classic approaches of automation system functionality, especially control loops, is shifted into the web application, and in this course are processed by a browser.

The control represented in FIG 1 essentially has the following tasks:
- connection classic field devices via profibus DP/PA, Hart, etc. and exchange of the EA signals of the field with the server;
- processing "real-time critical" control and regulation tasks that can only be insufficiently fulfilled by a browser

Modern field devices 14, 16 with ethernet interface may also be directly connected with the server, as shown in FIG 1.

As has already been set out, control system technical tasks, such as operating and observing, as well as control and regulation technical algorithms, are realized by web applications. Each computer 34 (e.g. PC, notebook, tablet, smartphone) connecting to the web server of the server 32 loads the web application 42 into a browser 38 and starts the processing. The requirements with regard to scalability, flexibility, and zero installation of a control system software are completely fulfilled by the approach of a control system running in the browser 38. Moreover, also aspects of raised availability can be addressed to a large extent, when using multi-instance/multi-entity capability of web apps and browsers.

A method for fulfilling raised availability and redundancy is explained in the following:
- each browser entity loading the web application from the server from then on is provided with all the I/O signals of the field plane;
- each operation or input into an entity of the control system web application is synchronized on all logged on entities. Thereby each entity of the control system we application is in the same condition.
- The outputs of the control and regulation technical functions CDATA of all control system web applications 42' for the field plane 26 are transferred into the server 32. If fewer than three instances 42' of the control system web applications are logged on, the output of the instance 42' with the lowest identification number is transferred to the field 26, as long as it confirms its presence by regular signals. If three or more instances 42' are logged on, the server 32 forwards the outputs of the instances according to the majority principle. Those web application entities 42' that differ from the majority are separated.

In a further developed form, it is conceivable that the control system web application 42 also communicates directly with devices 16 of the field plane 26. This scenario is advantageous in cases, in which all field devices are connected directly by Ethernet, because then the central server can be done without. For realizing this for, it may be required that the Internet browser program offers access to the I/O values from the facility (in a similar way as do currently present browser developments already allow for access to the hardware such as the 3D grapic card).

In a further development it is conceivable that besides the implementation of the control system also the engineering of the control system (including a HMI - Human Maschine Interface) is effected via a browser-based solution. The advantages - similarly to the control system - consist in the reduced administrative complexity and the enhanced scalability, because a nearly random number of instances/entities of the engineering application can be started. By the central access point in the server it can moreover be ensured that all engineers work at the current state of the system and changes can be synchronized and coordinated.

The dedicated system (hardware and software) used today for implementing the control system is used by a browser-based infrastructure. The new architecture allows for a simple scalability (control system can be performed in parallel on several devices) and a broader hardware support (the browser is supported as platform by a broad basis of devices in contrast to the customized hardware nowadays).

From the viewpoint of the architecture a further fundamental difference consists in that the system, which performs the control system (the computer with browser), is separate from the system storing and administrating the control system software. Thereby, the costs for the entire system can be reduced, because it is possible to also use low-cost PC hardware and not all functions need to be performed by expensive (specialized) server hardware.

Summing up, the example illustrates how the invention offers a distributed control system (DCS) based on web-technology.

## Claims

1. Method for operating a process automation system (10) that is designed for controlling an industrial process and/or traffic-control signals, the system (10) comprising field devices (12, 14, 16) arranged in a field (26) of the process and a central controller unit (18) for controlling the process through the field devices (12, 14, 16), wherein one or several or all of the field devices (12, 14, 16) transmit field data (FDATA) to the central controller unit (18) and the central controller unit (18) generates control data (CDATA) for one or several or all of the field devices (12, 14, 16) by running a control program (42'),
**characterized in that**
as the control program (42') a browser executable application (42) is provided, wherein the application (42) is designed to receive and process the field data (FDATA) and to generate and send out the control data (CDATA), wherein the central controller unit (18) executes an internet browser program (38), the internet browser program (38) running the application (42).

2. Method according to claim 1, wherein the application (42) comprises at least one control loop for controlling at least a part of the process, wherein each control loop is designed to generate at least a part of the control data (CDATA) in dependence on at least a part of the received field data (FDATA).

3. Method according to any of the preceding claims, wherein the application (42) is designed to provide a user interface to a user of the browser program (38), the user interface providing a monitoring functionality for the process automation system (10) and/or a configuration functionality for setting a parameter value of at least one parameter of the central controller unit (18) and/or of one or more of the field devices (12, 14, 16).

4. Method according to any of the preceding claims, wherein the application (42) is designed to provide an engineering tool for setting up the system (10).

5. Method according to any of the preceding claims, wherein the central controller unit (18) executes at least one additional internet browser program (38), each additional internet browser program (38) also running the same application (42'), and wherein a verification unit (44) receives the control data (CDATA) sent out by the running applications (42') and selects the control data (CDATA) of one of the running applications (42') according to a pre-defined selection criterion.

6. Method according to claim 5, wherein the selection criterion comprises:
- in the case that only two applications (42') are running, the application (42') running for the longest time is declared a master and the control data (CDATA) of the master is selected;
and/or
- in the case that more than two applications (42') are running, the control data (CDATA) of all the applications (42') are compared and the control data (CDATA) are selected according to a majority vote.

7. Method according to claim 5 or 6, wherein one of the running applications (42') receives a user input regarding a re-configuration of the running application (42') and the running application (42') notifies the remaining running applications (42') of this re-configuration.

8. Method according to any of the preceding claims, wherein by at least a part of the field data (FDATA) a measurement and/or a state of at least one of the field devices (12, 14, 16) is reported.

9. Method according to any of the preceding claims, wherein at least a part of the control data (CDATA) comprises a control command for a field device (12, 14, 16) and/or a setpoint value for a setpoint control performed by a field device (12, 14, 16).

10. Process automation system (10) that is designed for controlling an industrial process and/or traffic-control signals, the system (10) comprising
- field devices (12, 14, 16) arranged in a field (26) of the process,
- a central controller unit (18) for controlling the process through the field devices (12, 14, 16) by running a control program (42), and
- a communication network structure (20) coupling the field devices (12, 14, 16) with the central controller unit (18), **characterized in that**
the central controller unit (18) comprises at least one computing device (34), wherein each computing device (34) comprises an internet browser program (38) and is designed to execute at least one instance (38) of the internet browser program (38) and wherein the system (10) comprises a storage unit (32) containing the control program (42) as a browser executable application (42), the application (42) being designed to receive field data (FDATA) from the field (26) over the network structure (20) and to process the received field data (FDATA) and generate and send out control data (CDATA) to the field (26) over the network structure (20), and wherein the storage unit (32) is designed to provide the application (42) to each executed internet browser program (38) for running the application (42).

11. System (10) according to claim 10, wherein the field devices (12, 14, 16) comprise:
- at least one input device (12) for transforming a sensor signal into network data and/or
- at least one sensor device (16) directly connected to the network structure (20) and/or
- at least one actuation device (16) directly connected to the network structure (20) and/or
- at least one output device (12) for transforming the control data (CDATA) into a control signal for an actuation device.

12. System (10) according to claim 10 or 11, wherein the field devices (12, 14, 16) and the central controller unit (18) are coupled through a web server (32), wherein the web server (32) is designed to receive a part or all of the field data (FDATA) and forward at least a part of the received data to all running applications (42') in the central computing unit (18).

13. System (10) according to any of the claims 10 to 12, wherein at least one real-time control device is provided which is designed to generate additional control data (CDATA).

14. Tangible storage medium (40) comprising a control program in the form of a browser executable application (42), wherein the application is designed, if being run by an internet browser program (38), to receive and process field data (FDATA) from field devices (12, 14, 16) of a process automation system (10) and to generate and send out control data (CDATA) to field devices (12, 14, 16) of the system (10).

15. Web server device (32) comprising:
- a first connecting unit (C1) for connecting the device (32) to a first part (28) of a communication network structure (20), the first connecting unit (C1) being designed to receive field data (FDATA) from field devices (12, 14, 16) over the first part (28) of the communication network structure (20);
- a second connecting unit (C2) for connecting the device (32) to a second part (30) of a communication network structure (20), the second connecting unit (C2) being designed to forward at least a part of the received field data (FDATA) to at least one internet browser program (38) over the second part (30) of the communication network structure (20);
**characterized by**
- a tangible storage medium (40) according to claim 14 and
- a web server program for sending out the application (42) to at least one requesting internet browser program (38).
